# EUROPEAN PATENT SPECIFICATION

(11) **EP 1 303 716 B1**
(45) Date of publication and mention of the grant of the patent: **21.02.2007**
(21) Application number: 01960779.5
(22) Date of filing: 13.07.2001
(51) Int. Cl.: F16K 1/22, F24F 13/10, F16L 55/10, A62C 2/06

(54) **DAMPER IN AN AIR CONDITIONING SYSTEM COMPRISING A CASING PART WITH A TURNABLE BLADE**
KLAPPEVENTIL FÜR EINE KLIMANLAGE ENTHALTEND EIN GEHÄUSE MIT EINER DREHBAREN KLAPPE
REGISTRE D'UN SYSTEME DE CONDITIONNEMENT D'AIR COMPRENANT UNE ENVELOPPE DANS LAQUELLE EST MENAGEE UNE LAME TOURNANTE

(30) Priority: 17.07.2000 FI 20001677
(43) Date of publication of application: 23.04.2003
(73) Proprietor: Fläkt Woods AB, 55184 Jönköping (SE)
(72) Inventor: TUOMI, Jouni, FIN-20300 Turku (FI)
(74) Representative: Valkeiskangas, Tapio Lassi Paavali
(86) International application number: PCT/FI2001/000671
(87) International publication number: WO 2002/006710

(56) References cited:
- DE-A1- 3 313 546
- DE-A1- 4 423 370
- GB-A- 1 327 371
- US-A- 3 809 361
- US-A- 4 572 478
- US-A- 4 766 807
- US-A- 5 669 350

## Description

### BACKGROUND OF THE INVENTION

The invention relates to a damper in an air conditioning system, comprising a casing part which has a turnable blade, which is turnable between an open and a closed position, whereby the blade is in its closed position arranged against a stop part on the inner surface of the casing part.

A damper in an air conditioning system refers in this connection to any damper in an air conditioning system, such as a fire damper.

In this kind of damper, the objective of the stop part is to stop the blade when the damper is in the closed position in such a way that the blade blocks the connection in the damper and in such a way that it at least partly prevents gas from flowing between the blade and the inner surface of the casing part when the blade is in the closed position.

Known from the prior art is a damper in an air conditioning system that comprises a stop part attached to the inner surface of the casing part by welding. Dampers are also known in which the stop part is attached to the casing part by means of a fixing member, for example by riveting.

The problem in these known solutions is that they have a lot of parts that have to be connected to each other.

As other examples of the prior art US-A-5 669 350, US-A-1 572 478, DE-A-3 313 546, DE-A-4 423 370 and US-A-3 809 361 can be mentioned.

### BRIEF DESCRIPTION OF THE INVENTION

An object of the invention is thus to provide a damper in an air conditioning system, solving the above problems.

The object of the invention is achieved by means of a damper in an air conditioning system described in the independent claim 1.

Preferred embodiments of the invention are disclosed in the dependent claims.

The invention is based on the idea that the casing part of the damper is formed in such a way that the inner surface of the casing part forms the stop part. As a result, there is no need to attach a separate stop part to the inner surface of the casing part

An advantage of the damper according to the invention is therefore that it has fewer parts than a conventional damper. Further, it can be manufactured with a smaller number of steps.

Also other advantages are achieved with a damper according to the invention. For instance, fire dampers change their form due to heat. As a result of this, gas may flow between the stop part and the casing part if the stop part has not been attached properly. In the damper according to the invention, this problem does not exist, because the stop part is seamlessly attached to the inner surface of the casing part, in other words it is a part fixedly belonging to the casing part. For this reason, no gases can flow between the inner surface of the casing part and the stop part.

### BRIEF DESCRIPTION OF THE DRAWINGS

The invention will now be described in greater detail in connection with preferred embodiments, with reference to the attached drawings, of which

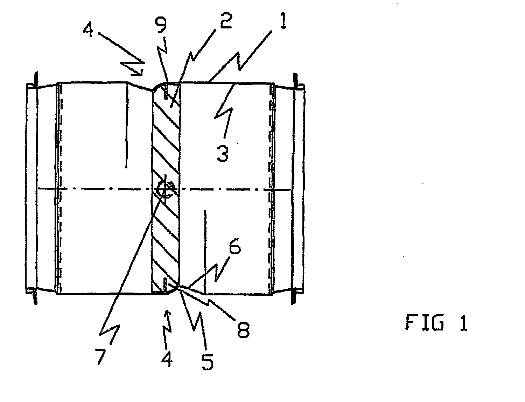

Figure 1 shows a sectional view of a damper of an air conditioning system, in which the stop part forms a protrusion on the inner surface of the casing part; and

### DETAILED DESCRIPTION OF THE INVENTION

The figure 1 shows a damper in an air conditioning system, comprising a casing part 1, which has a turnable blade 2, which is turnable between an open and a closed position.

The figure 1 shows such a damper in an air conditioning system that is intended to be mounted between two air conditioning ducts (not shown) in such a way that the damper blocks the connection between the air conditioning ducts. The damper may also be intended to be mounted at another point in the air conditioning system, such as between an air conditioning duct and some apparatus (not shown) or between an air conditioning duct and the space to be air-conditioned (not shown).

The blade 2 is in its closed position arranged to be against a stop part 4 on the inner surface 3 of the casing part 1.

The stop part 4 is formed of the inner surface 3 of the casing part 1. Figure 1 shows a damper in which the stop part 4 forms a protrusion 6 on the inner surface 3 of the casing part 1.

The figure 1 shows a damper that comprise two stop parts and where the blade 2 is turnable substantially around the axis 7 in the middle of the blade 2. In such an arrangement, the blade 2 hits the stop part 4 at two points when the blade 2 is turned to the closed position. In the figures, these stop parts 4 are further dimensioned and formed in such a way that the blade 2 is, except for only two short portions, fully supported against the stop part 4. In the dampers according to the figures, one stop part 4 is positioned on either side of the blade 2. Such an arrangement enables tight closing of the damper. In a damper having a rectangular cross-section, only one stop part 4 can be used if the blade 2 is turnable around the axis in the vicinity of one edge thereof. The number of stop parts 4 can, of course, be something else than one or two.

The stop part 4 affects the form of the outer surface for instance in a casing part 1 made of sheet steel , as in Figure 1. If the stop part 4 forms a cavity 5 on the inner surface 3 of the casing part 1, there is correspondingly a protrusion on the outer surface of the casing part 1, and if the stop part 4 forms a protrusion 6 on the inner surface 3 of the casing part 1, there is correspondingly a cavity on the outer surface of the casing part 1.

The stop part 4 is preferably inclined and/or rounded, in other words it does not have cross-directional surfaces relative to the air flow (not shown) flowing through the damper. In such a design, the stop part 4 has a smaller effect on the air flow through the damper when the blade 2 is in its open position.

Figure 1 show an arrangement in which the edge 8 against the stop part 4 of the blade 2 and the inner surface 3 of the casing part 1 corresponds at least partly to the form of the stop part 4 and the inner surface 3 of the casing part 1. Such an arrangement results in tighter closing of the damper when the blade 2 is in the closed position.

The figure shows an arrangement in which the edge 8 of the blade 2 to be positioned against the stop part 4 is partly rounded. Said edge 8 can alternatively or additionally be inclined. With this kind of arrangement, it is easier to tum the blade 2 to the closed position, because the blade has no sharp edges 8 that could stick against the inner surface 3 of the casing part 1. This kind of arrangement also allows closer positioning of the edge 8 or edges of the blade 2 and is thus more tightly against the inner surface 3 of the casing part 1.

The damper preferably comprises a seal 9 arranged to be positioned between the blade 2 and the inner surface 3 of the casing part 1 in the closed position of the blade 2.

It is obvious to a person skilled in the art that with the advance of technology, the basic idea of the invention can be implemented in a plurality of ways. Thus, the invention and the embodiments thereof are not confined to the above-described examples but can vary within the scope of the claims.

## Claims

1. A damper in an air conditioning system, comprising a casing part (1) made of sheet steel, this casing part having a turnable blade (2), which is turnable between an open and a closed position, whereby the blade (2) is in its closed position arranged against a stop part (4) on the inner surface (3) of the casing part (1), **characterized in that** the stop part (4) is formed of the inner surface (3) of the casing part (1) either by forming a cavity (5) on the inner surface of the casing part (1) and correspondingly a protrusion on the outer surface of the casing part (1), or by forming a protrusion (6) on the inner surface of the casing part (1) and correspondingly a cavity on the outer surface of the casing part (1).

2. A damper according to claim 1, **characterized in that** the stop part (4) is inclined and/or rounded.

3. A damper according to claim 1 or 2, **characterized in that** the edge (8) against the stop part (4) of the blade (2) corresponds at least partly to the form of the stop part (4).

4. A damper according to any one of claims 1 to 3, **characterized in that** the edge (8) against the stop part (4) of the blade (2) is at least partly rounded and/or inclined.

5. A damper according to any one of claims 1 to 4, **characterized in that** it comprises a seal (9) arranged to be positioned between the blade (2) and the inner surface (3) of the casing part (1) in the closed position.

6. A damper according to any one of claims 1 to 5, **characterized in that** there are two stop parts (4).

## Patentansprüche

1. Klappe in einer Klimaanlage mit einem aus Stahlblech hergestellten Gehäuseteil (1), wobei das Gehäuseteil einen drehbaren Flügel (2) hat, der zwischen einer offenen und einer geschlossenen Stellung drehbar ist, wodurch sich der Flügel (2) in seiner geschlossenen Stellung in Anordnung an einem Anschlagteil (4) auf der Innenfläche (3) des Gehäuseteils (1) befindet, **dadurch gekennzeichnet, daß** das Anschlagteil (4) aus der Innenfläche (3) des Gehäuseteils (1) gebildet ist, indem entweder ein Hohlraum (5) auf der Innenfläche des Gehäuseteils (1) und entsprechend ein Vorsprung auf der Außenfläche des Gehäuseteils (1) gebildet ist oder indem ein Vorsprung (6) auf der Innenfläche des Gehäuseteils (1) und entsprechend ein Hohlraum auf der Außenfläche des Gehäuseteils (1) gebildet ist.

2. Klappe nach Anspruch 1, **dadurch gekennzeichnet, daß** das Anschlagteil (4) geneigt und/oder abgerundet ist.

3. Klappe nach Anspruch 1 oder 2, **dadurch gekennzeichnet, daß** die am Anschlagteil (4) anliegende Kante (8) des Flügels (2) mindestens teilweise der Form des Anschlagteils (4) entspricht.

4. Klappe nach einem der Ansprüche 1 bis 3, **dadurch gekennzeichnet, daß** die am Anschlagteil (4) anliegende Kante (8) des Flügels (2) mindestens teilweise abgerundet und/ oder geneigt ist.

5. Klappe nach einem der Ansprüche 1 bis 4, **dadurch gekennzeichnet, daß** sie eine Dichtung (9) aufweist, die so angeordnet ist, daß sie in der geschlossenen Stellung zwischen dem Flügel (2) und der Innenfläche (3) des Gehäuseteils (1) positioniert ist.

6. Klappe nach einem der Ansprüche 1 bis 5, **dadurch gekennzeichnet, daß** zwei Anschlagteile (4) vorhanden sind.

## Revendications

1. Registre dans un système de climatisation, comprenant une partie formant enveloppe (1) fabriquée à partir de tôle d'acier, la partie formant enveloppe comportant une pale pouvant tourner (2), qui peut tourner entre une position ouverte et une position fermée, moyennant quoi la pale (2) est dans sa position fermée agencée contre une partie d'arrêt (4) sur la surface interne (3) de la partie formant enveloppe (1), **caractérisé en ce que** la partie d'arrêt (4) est formée de la surface interne (3) de la partie formant enveloppe (1) soit par formation d'une cavité (5) sur la surface interne de la partie formant enveloppe (1) et de manière correspondante d'une saillie sur la surface externe de la partie formant enveloppe (1), soit par formation d'une saillie (6) sur la surface interne de la partie formant enveloppe (1) et de manière correspondante d'une cavité sur la surface externe de la partie formant enveloppe (1).

2. Registre selon la revendication 1, **caractérisé en ce que** la partie d'arrêt (4) est inclinée et/ou arrondie.

3. Registre selon la revendication 1 ou 2, **caractérisé en ce que** le bord (8) contre la partie d' arrêt (4) de la pale (2) correspond au moins partiellement à la forme de la partie d'arrêt (4).

4. Registre selon l'une quelconque des revendications 1 à 3, **caractérisé en ce que** le bord (8) contre la partie d'arrêt (4) de la pale (2) est au moins partiellement arrondi et/ou incliné.

5. Registre selon l'une quelconque des revendications 1 à 4, **caractérisé en ce qu'**il comprend un joint (9) agencé de façon à être positionné entre la pale (2) et la surface interne (3) de la partie formant enveloppe (1) dans la position fermée.

6. Registre selon l'une quelconque des revendications 1 à 5, **caractérisé en ce qu'**il comporte deux parties d'arrêt (4).
